# EUROPÄISCHE PATENTSCHRIFT

(11) **EP 0 855 083 B1**
(45) Veröffentlichungstag und Bekanntmachung des Hinweises auf die Patenterteilung: **06.02.2002**
(21) Anmeldenummer: 96934526.3
(22) Anmeldetag: 02.10.1996
(51) Int. Cl.: G21C 3/62

(54) **MODIFIZIERTER KERNBRENNSTOFF ZUR VERZÖGERUNG DER ENTSTEHUNG DES RIM-EFFEKTS**
MODIFIED, RIM EFFECT-DELAYING NUCLEAR FUEL
COMBUSTIBLE NUCLEAIRE MODIFIE EN VUE DE RETARDER L'EFFET RIM

(30) Priorität: 05.10.1995 LU 88668
(43) Veröffentlichungstag der Anmeldung: 29.07.1998
(73) Patentinhaber: EUROPÄISCHE ATOMGEMEINSCHAFT (EURATOM), L-2920 Luxembourg (LU)
(72) Erfinder: MATZKE, Hansjoachim, D-76356 Weingarten (DE); KINOSHITA, Motoyasu, Tokyo 201 (JP)
(74) Vertreter: Strych, Werner Maximilian Josef, Dr.
(86) Internationale Anmeldenummer: EP9604309
(87) Internationale Veröffentlichungsnummer: WO9713252

(56) Entgegenhaltungen:
- EP-A- 0 317 774
- EP-A- 0 450 469
- DE-A- 1 962 764
- DATABASE WPI Week 8015 Derwent Publications Ltd., London, GB; AN 80-26210C XP002004659 & JP,A,55 027 942 (TOKYO SHIBAURA) , 28.Februar 1980
- DATABASE WPI Week 9247 Derwent Publications Ltd., London, GB; AN 92-386606 XP002004660 & JP,A,04 285 891 (GENSHI) , 9.Oktober 1992
- DATABASE WPI Week 8819 Derwent Publications Ltd., London, GB; AN 88-129754 XP002004661 & JP,A,63 073 189 (TOSHIBA) , 2.April 1988
- DATABASE WPI Week 8105 Derwent Publications Ltd., London, GB; AN 81-06685D XP002004662 & JP,A,55 151 292 (TOKYO SHIBAURA) , 26.November 1980

## Beschreibung

Die vorliegende Erfindung betrifft einen modifizierten Kernbrennstoff gemäß dem Oberbegriff des Anspruches 1 sowie ein Verfahren zu seiner Herstellung gemäß dem Oberbegriff des Anspruches 3.

In den vergangenen Jahren wurde der Abbrand des Leichtwasserreaktor-(LWR)-Brennstoffes Urandioxid (UO₂) häufig bis zu über 40 GWd/tU erhöht. Abbrände von 50 bis 60 GWd/tU wurden erreicht und noch höhere Abbrände sind geplant. Bei Abbränden über 40 GWd/tU bildet sich im Urandioxid ein poröser äußerer Ring mit sehr kleinen Körnern und einer typischen Ausdehnung von 100 bis 200 µm. In dieser Randzone ist der lokale Abbrand aufgrund verstärkter Pu-Bildung durch Resonanzeinfang von Neutronen erhöht.

Obzwar diese Zone sehr dünn ist, ist es wichtig, daß diese scheinbar dünne Zone von 100 bis 200 µm 4 bis 8 % des Brennstoffvolumens beinhaltet. Dieses Phänomen ist im Stand der Technik als sog. "RIM-Effekt" beschrieben (J. Nucl. Mater. **189** (1992), Seite 141-148, Hj. Matzke "On the RIM Effect in High Burnup UO₂LWR Fuels"; Int. Topical Meeting on LWR Fuel Performance, Avignon, April 1991, **ANS-ENS, Vol. 2** (1991), Seite 620-626, T.Kameyama et al, Analysis of RIM Structure Formation in Battelle High Burnup Effects programme).

Bei Abbränden ≥ 60 GWd/tU wächst die vorstehend genannte Zone weiter in den Brennstoff hinein und kann bis zu 30 % des Brennstoffvolumens einnehmen.

Dieser sog. RIM-Effekt bewirkt jedoch eine Reihe von Nachteilen:
1. Durch die hohe Porosität und den hohen lokalen Abbrand wird eine lokal reduzierte Wärmeleitfähigkeit und somit eine Wärmebarriere am Hüllrohr verursacht, wobei die Brennstofftemperaturen erhöht sind und eine unerwünscht erhöhte Gasabgabe bewirkt werden kann.
2. Im Falle des Eindringens von Wasser in den Brennstab, sei es Kühlwasser während des Reaktorbetriebes oder während der Zwischenlagerung im Wasserbecken, oder vom Grundwasser im Szenario der direkten Endlagerung benutzter Brennstoffstäbe, wird das Wasser zuerst mit der porösen Struktur mit kleinen Körnern reagieren. Dabei werden Oxidationsprozesse, Vordringen höherer Oxide an Korngrenzen und somit die Auslaugungsraten im Vergleich zu normalem Urandioxid beschleunigt und erhöht sein.
3. Bislang unbekannte, potentiell negative Auswirkungen auf die Reaktorsicherheit bestehen z.B. im Fall eines durch Reaktivitätsanstieg bewirkten Unfalls.

Der Mechanismus dieser Polygonisierung oder dieses "Kornunterteilungsprozesses" ist im Augenblick noch unbekannt. Hinweise sprechen jedoch dafür, daß die Bildung von unter Überdruck stehenden Spaltgasblasen der Hauptgrund für diese unerwünschte Strukturänderung im Urandioxid bei hohem Abbrand ist (vgl. J. Nucl. Mater. **189).** Bedeutung erlangt überdies die Bildungsrate von Versetzungslinien.

Eine der treibenden Kräfte für den Kornunterteilungsprozeß ist dabei die Ausfällung von Edelgasspaltprodukten in gasgefüllten Blasen. Solche Blasen entstehen gewöhnlich an Ausscheidungen anderer unlöslicher Spaltprodukte, d.h. Spaltprodukten der Edelmetalle Pd, Ru, Rh, Tc und des Metalls Mo. Diese Metallausscheidungen bilden sich während der Bestrahlung mit wachsendem Abbrand. Die Größe der Blasen und der Druck in den Blasen hängen dabei von der Konzentration der Gasblasen oder der Blasendichte ab.

Aus der DE-A-1 962 764 ist ein keramischer Werkstoff, insbesondere ein Spaltmaterial für Kernreaktor-Brennstoffe bekannt, wobei das keramische spaltbare Material von gesinterter polykristalliner Form ist und Magnesiumoxid als ein Additiv enthält, und das keramische spaltbare Material gesintertes Urandioxid ist.

Aufgabe der vorliegenden Erfindung ist es daher, einen modifizierten Leichtwasser-Kernbrennstoff bereitzustellen, bei dem während der Fabrikation, d.h. also vor der Bestrahlung, eine große Anzahl von Ausscheidungen, die als Keimbildungsort für Spaltgasblasen dienen, gebildet werden sowie ein Verfahren zu dessen Herstellung.

Erfindungsgemäß wird diese Aufgabe durch die Merkmale der Ansprüche 1 und 3 gelöst. Bevorzugte Weiterbildungen sind den Unteransprüchen zu entnehmen. Gemäß der Erfindung ist in der Matrix von Urandioxid ein in überstöchiometrischem Urandioxid (UO₂₊ₓ) in fester Lösung befindliches Erdalkalimetalloxid und/oder ein Gemisch von Erdalkalimetalloxiden, oder ein Oxid der IV. Hauptgruppe und/oder der II. Nebengruppe des Periodensystems eingebracht und in der Urandioxid-Matrix die oxidischen Substanzteilchen örtlich von 2 bis 4 x 10¹⁷ pro cm³ und einer Partikelgröße von 3 bis 5 nm enthalten sind. Durch die Einbringung dieser oxidischen Substanzen kann eine hohe Dichte von kleinen Gasblasen erzeugt werden, statt einer kleineren Dichte größerer Blasen. Dabei wird das gesamte Volumen, das bei einem vorgegebenen Abbrand von den Blasen beansprucht wird, reduziert.

Das durch die Blasen verursachte Schwellen des Urandioxids ist entsprechend reduziert, ebenso wie die treibende Kraft für die Kornunterteilung. Zusätzlich wird dabei das Gleichgewicht zwischen der Ausheilung von durch den Spaltprozeß erzeugten Leerstellen und Zwischengitteratomen geändert. Dies beeinflußt das Wachstum und die Beweglichkeit von Versetzungslinien, die ebenfalls Wechselwirkung mit kleinen Blasen ausüben und diese festhalten.

Dabei ist es erforderlich, eine hohe Konzentration von Ausscheidungen in Urandioxid bereitzustellen, wobei eine mechanische Mischung der Pulveroxide ungeeignet ist, da
1. die erwünschte hohe Konzentration von Ausscheidungen nicht erreicht wird und
2. das Kornwachstum während des Sintervorganges die Ausscheidungen aus der Urandioxid-Matrix beseitigt.

Erfindungsgemäß hat es sich als vorteilhaft erwiesen, daß Verunreinigungen zugesetzt werden, die in überstöchiometrischem UO₂₊ₓ löslich sind. Mittels geeigneter Sinterbedingungen, insbesondere unter oxidierenden Bedingungen, wird dabei die nötige hohe Dichte des Kernbrennstoffes erreicht, wobei im Anschluß daran das hochdichte UO₂₊ₓ mit der zugesetzten Verunreinigung in fester Lösung wieder reduziert wird. Da dieser Reduktionsschritt bei relativ niedrigen Temperaturen durchgeführt wird, findet kein Kornwachstum statt und die zugesetzten Verunreinigungen werden in einer hohen Dichte kleinerer Ausscheidungen ohne Wanderung über größere Strecken ausgefällt.

Als für die Erfindung geeignete zugesetzte oxidische Substanzen dienen -wie eingangs erwähnt- Erdalkalimetalloxide und/oder ein Gemisch von Erdalkalimetalloxiden. Ein bevorzugtes Erdalkalimetalloxid ist Magnesiumoxid. Magnesiumoxid ist in UO₂₊ₓ löslich, nicht jedoch in Urandioxid. Neben einer Erreichung solcher Ausscheidungen mittels eines Erdalkalimetalloxids MgO sind auch Oxide der weiteren leichteren Erdalkalimetalle, wie Berylliumoxid (BeO) oder Mischungen aus Magnesium und Berylliumoxid geeignet.

Es ist möglich, daß neben den leichteren Erdalkalimetalloxiden auch oxidische Substanzen der IV. Hauptgruppe des Periodensystems und/oder der II. Nebengruppe des Periodensystems geeignet sind. Mögliche Oxide sind dabei Pb(II)O oder Zn(II)O.

Dabei wirken die durch die vorstehend genannten Oxide bewirkten Ausscheidungen als Keimbildungsplätze für Spaltgasblasen. Die durch unter hohem Druck stehende Gasblasen bewirkte Gitterenergie wird dabei gesenkt. Die Ausscheidungen mittels der vorstehend genannten oxidischen Substanzen können darüber hinaus auch als Rekombinationsort für Zwischengitteratome und Leerstellen dienen, was zugleich die Bildungsrate von Versetzungslinien reduziert und somit die Gitterenergie senkt. Als Folge davon wird der Kornunterteilungsprozeß verhindert oder verzögert.

Erfindungsgemäß hat es sich als vorteilhaft erwiesen, daß die oxidische Substanz in Mengen von 0,3 bis 3 Gew.-%, insbesondere in Mengen von 0,3 bis 0,9 % Gew.-% enthalten ist. Bei Einhalten dieser spezifischen Gehaltsgrenzen wird ein Brennstoff mit ausgezeichneten Eigenschaften erhalten, nämlich ein Brennstoff, der eine sehr hohe Dichte kleiner Ausscheidungen eines Oxids enthält, das in Urandioxid unlöslich ist, wobei diese Ausscheidungen als Keimbildungsplätze für Spaltgasblasen wirken und die Bildung der RIM-Struktur reduzieren und verzögern. Werden die vorstehenden Werte überschritten, so ändern sich die Neutronenphysik und -ökonomie des Brennstoffs, ohne daß anderweitig ein Vorteil entsteht. Werden die Werte unterschritten. so ist die erreichbare Konzentration von Ausscheidungen zu klein, um den gewünschten Effekt zu erreichen.

Der erfindungsgemäße modifizierte Leichtwasser-Kernbrennstoff kann dadurch hergestellt werden, daß dem UO₂-Pulver vor dem Pressen das MgO-Pulver zugesetzt, im Anschluß daran eine Sinterung im Bereich von 1.100 bis 1.500 °C, vorzugsweise von 1.250 bis 1.400 °C, unter oxidierender Atmosphäre durchgeführt wird und das erhaltene Produkt anschließend bei tieferen Temperaturen als der Sintertemperatur in einer geeigneten Atmosphäre reduziert wird.

Dabei wird ein modifizierter Leichtwasser-Kernbrennstoff auf Basis von Urandioxid erhalten, der örtlich sehr hohe Konzentrationen von 2 bis 4 x 10¹⁷ oxidische Substanz-Teilchen pro cm³ und eine Partikelgröße von 3 bis 5 nm in der Urandioxid-Matrix enthält.

Ein gemäß dem erfindungsgemäßen Verfahren dotiertes Urandioxid weist eine hohe Keimdichte für Spaltgasblasen auf, wobei zugleich der Kornunterteilungsvorgang verzögert wird.

Erfindungsgemäß hat es sich gezeigt, daß als oxidische Atmosphären im wesentlichen CO/CO₂-Gasmischungen oder feuchter Wasserstoff bzw. Wasserdampf, vorzugsweise CO/CO₂ in Verhältnissen von 1:10 bis 1:200, vorzugsweise 1:50 bis 1:100, eingesetzt werden. Beim anschließenden Reduktionserhitzungsschritt werden i.d.R. tiefere Temperaturen als beim Sintern eingesetzt, wobei zweckmäßigerweise Temperaturen von 800 bis 1.700°C, vorzugsweise von 1.100 bis 1.200 °C in einer Atmosphäre aus Ar/H₂ oder H₂, vorzugsweise Ar/H₂, verwendet werden. Dabei wird der erfindungsgemäße modifizierte Leichtwasser-Kernbrennstoff auf Basis von Urandioxid mit normaler Korngröße aber mit einer sehr hohen Konzentration von oxidischen Ausscheidungen pro cm³ einer geringen Größe bereitgestellt.

Die Erfindung wird nachfolgend anhand eines Beispiels näher erläutert:

Mechanische Mischungen von UO₂-Pulver mit 0,3 bis 3,0 Gew.-% MgO-Pulver wurden hydraulisch mit einem Druck von 5,4 to/cm² zu Grünlingen gepreßt. Zur Bestimmung der am besten geeigneten Gasgemische wurde das Verhältnis CO/CO₂ von 1:10 bis 1:200 variiert, die Sintertemperaturen wurden zwischen 1.100 und 1.500°C variiert und die abschließende Reduktion wurde bei 800, 1.000, 1.200 oder 1.600 bis 1.650°C durchgeführt, wobei das verwendete Gas immer Ar/8% H₂ war. Der angestrebte Dichtebereich von 92 bis 95% der theoretischen Dichte wurde mit einem Gasgemisch CO/CO₂ von 1:100 oder 1:50 bei 0,3, 0,6 oder 0,9 Gew.-% MgO erreicht, wenn die Sintertemperatur bei 1.300, 1.350 oder 1.450°C lag und die Reduktion bei 1.000 oder 1.200°C durchgeführt wurde. Das beste Ergebnis wurde bei 0,6% MgO, 1.350°C Sintertemperatur und 1.200°C Reduktionstemperatur erzielt.

Elektronenmikroskopie bestätigte die völlige Lösung des MgO im gesinterten UO₂₊ₓ (also vor der Reduktion) sowie die Bildung von 3 x 10¹⁷ kleinen MgO-Ausscheidungen pro cm³ nach Reduktion des UO₂₊ₓ zu UO₂.

Die Ergebnisse sind der nachfolgenden Tabelle zu entnehmen.

**TABELLE 1**

| Fabrikationsbedingungen und erreichte Dichten (% der theoretischen Dichte) von UO₂ + MgO | | | | | | |
|---|---|---|---|---|---|---|
| Sinterung , 5 h | | Reduktion* | Dichte | | | |
| CO/CO2 | T, °C | T, °C | 0,3% | 0,6% | 0,9% | 3% |
| 1:200 | 1400 | 1200 | - | - | - | 84 |
| 1:100 | 1500 | 800 | 88 | - | - | - |
| | | 1200 | 88 | - | - | - |
| | | 1620 | 87 | - | - | - |
| | | | | | | |
| | 1450 | 1000 | 92,5 | - | - | - |
| | | 1200 | 93 | 93 | 92 | - |
| | | | | | | |
| | 1350 | 1200 | - | 94 | - | |
| | | 1620 | 90 | 91 | 90 | - |
| | | | | | | |
| | 1300 | | - | 93 | | - |
| | | | - | 90 | - | |
| | | | | | | |
| | 1200 | 1200 | 89 | - | | - |
| | | 1600 | 88 | - | | - |
| | | | | | | |
| | 1100 | 1200 | - | - | 89,5 | |
| 1:50 | 1400 | 1200 | - | 92,5 | - | - |
| | | 1650 | - | 91 | - | - |
| | | | | | | |
| | 1300 | 1200 | - | 93 | - | - |
| | | 1600 | - | 90 | - | - |
| | | | | | | |
| | 1100 | 1000 | - | - | 89 | |
| 1:10 | 1400 | 1200 | - | - | - | 86 |

| | | | | | | |
|---|---|---|---|---|---|---|
| * Reduktion immer in Ar/8% H₂, 2 h | | | | | | |

## Patentansprüche

1. Modifizierter, die Entstehung des RIM-Effekts verzögernder Leichtwasser-(LWR)-Kernbrennstoff auf Basis von Urandioxid (UO₂),
**dadurch gekennzeichnet, daß**
in dessen Matrix eine in überstöchiometrischem Urandioxid (UO₂₊ₓ) in fester Lösung befindliche Erdalkalimetalloxid und/oder ein Gemisch von Erdalkalimetalloxiden, oder ein Oxid der IV. Hauptgruppe und/oder der II. Nebengruppe des Periodensystems als oxidischen Substanzen eingebracht und in der Urandioxid-Matrix die oxidischen Substanzteilchen örtlich von 2 bis 4 x 10¹⁷ pro cm³ und einer Partikelgröße von 3 bis 5 nm enthalten sind.

2. Kernbrennstoff nach Anspruch 1,
**dadurch gekennzeichnet, daß**
der Kernbrennstoff von 0,3 bis 3 Gew.-% der oxidischen Substanzen enthält.

3. Verfahren zum Herstellen eines modifizierten Leichtwasser-Kernbrennstoffes nach Anspruch 1 oder 2,
**dadurch gekennzeichnet, daß**
nach Zusatz der oxidischen Substanz eine Sinterung bei Temperaturen von 1.100 bis 1.500 °C unter oxidierenden Atmosphären und anschließende Erhitzung bei Temperaturen von 800 bis 1.700 °C in einer reduzierenden Atmosphäre durchgeführt wird.

## Claims

1. A modified, the formation of the RIM-effect delaying light water (LWR) nuclear fuel on the basis of uranium dioxide (UO₂)
**characterised in that**
in its matrix an over-stoichiometric uranium dioxide (UO₂₊ₓ) in solid solution containing alkaline earth metal and/or a mixture of alkaline earth metal oxides, or an oxide from main group IV and/or subgroup II of the periodic table is incorporated as oxidic substances and wherein in the uranium dioxide matrix the oxidic substance particles locally of 2 to 4 x 10¹⁷ per cm³ and a particle size of 3 to 5 nm are contained.

2. Nuclear fuel according to claim 1
**characterised in that**
the nuclear fuel contains between 0.3 to 3 weight-% of the oxidic substances.

3. A process for the preparation of a modified light water nuclear fuel according to claims 1 or 2,
**characterised in that**
after addition of the oxidic substance sintering is carried out at temperatures of 1.100 to 1.500 °C under oxidizing atmospheres and subsequent heating at temperatures of 800 to 1700 °C in a reducing atmosphere.

## Revendications

1. Combustible nucléaire modifié pour réacteur à eau légère (LWR), retardant l'apparition de l'effet RIM et à base de dioxyde d'uranium (UO₂), **caractérisé en ce que**
un oxyde de métal alcalinoterreux se trouvant sous forme de solution solide dans du dioxyde d'uranium suprastoechiométrique (UO₂₊ₓ) et/ou un mélange d'oxydes de métaux alcalinoterreux ou un oxyde du groupe principal IV et/ou du groupe secondaire II de la table périodique sont incorporés dans la matrice de ce combustible sous forme de substances oxydiques et **en ce que** les particules de substances oxydiques sont contenues localement dans la matrice de dioxyde d'uranium à raison de 2 à 4 x 10¹⁷ par cm³ et avec une granulométrie allant de 3 à 5 nm.

2. Combustible nucléaire selon la revendication 1, **caractérisé en ce que**
le combustible nucléaire comprend de 0,3 à 3 % en poids des substances oxydiques.

3. Procédé destiné à la fabrication d'un combustible modifié pour réacteur nucléaire à eau légère selon la revendication 1 ou la revendication 2, **caractérisé en ce que** :
après avoir ajouté la substance oxydique, on effectue un frittage à des températures allant de 1100 à 1500°C dans des atmosphères oxydiques et à un chauffage consécutif à des températures allant de 800 à 1700°C dans une atmosphère réductrice.
